# EUROPEAN PATENT SPECIFICATION

(11) **EP 3 471 555 B1**
(45) Date of publication and mention of the grant of the patent: **07.02.2024**
(21) Application number: 17733039.6
(22) Date of filing: 12.06.2017
(51) Int. Cl.: A23L 3/30, A23L 5/10, A23L 5/30, A23L 13/70

(54) **PROCEDURE FOR FOOD STRUCTURE IMPROVEMENT PRIOR TO COOKING AND RELATED EQUIPMENT**
VERFAHREN ZUR VERBESSERUNG DER NAHRUNGSMITTELSTRUKTUR VOR DEM KOCHEN UND ZUGEHÖRIGE AUSRÜSTUNG
PROCÉDÉ D'AMÉLIORATION DE LA STRUCTURE ALIMENTAIRE AVANT LA CUISSON ET ÉQUIPEMENT ASSOCIÉ

(30) Priority: 16.06.2016 IT UA20164431
(43) Date of publication of application: 24.04.2019
(73) Proprietor: Next Cooking Generation Srl, 64011 Alba Adriatica (TE) (IT)
(72) Inventor: DI CLERICO, Daniele, 64011 Alba Adriatica (TE) (IT)
(74) Representative: Cipolletti, Serena
(86) International application number: PCT/IB2017/053465
(87) International publication number: WO 2017/216703

(56) References cited:
- WO-A1-2007/033416
- DE-A1- 10 102 903
- DE-A1-102004 011 922
- GB-A- 2 458 739
- JP-A- 2003 047 395
- JAYASOORIYA ET AL: "Effect of high power ultrasound and ageing on the physical properties of bovine Semitendinosus and Longissimus muscles", MEAT SCIENCE, ELSEVIER SCIENCE, GB, vol. 75, no. 4, 30 January 2007 (2007-01-30), pages 628-639, XP005865770, ISSN: 0309-1740, DOI: 10.1016/J.MEATSCI.2006.09.010
- T.S. AWAD ET AL: "Applications of ultrasound in analysis, processing and quality control of food: A review", FOOD RESEARCH INTERNATIONAL, vol. 48, no. 2, 1 October 2012 (2012-10-01), pages 410-427, XP055036423, ISSN: 0963-9969, DOI: 10.1016/j.foodres.2012.05.004
- HAI-JUN CHANG ET AL: "Effects of Ultrasound Treatment on Connective Tissue Collagen and Meat Quality of Beef Semitendinosus Muscle", JOURNAL OF FOOD QUALITY., vol. 38, no. 4, 2 July 2015 (2015-07-02), pages 256-267, XP055327500, US ISSN: 0146-9428, DOI: 10.1111/jfq.12141
- JAYASOORIYA S D ET AL: "EFFECT OF HIGH POWER ULTRASOUND WAVES ON PROPERTIES OF MEAT: A REVIEW", INTERNATIONAL JOURNAL OF FOOD PROPERTIES, MARCEL DEKKER, NEW YORK, NY, US, vol. 7, no. 2, 1 January 2004 (2004-01-01) , pages 301-319, XP008075539, ISSN: 1094-2912, DOI: 10.1081/JFP-120030039

## Description

### BACKGROUND OF THE INVENTION.

Field of application of the invention.

The fields of application of the invention in question may be identified:
1. Research in food technologies.
2. Large and small restaurants and catering.
3. Large and small distribution of food.

The Invention is defined by the appended claims.

### STATE OF THE ART

The treatment of some types of food before cooking is of fundamental importance in order to give such food some essential characteristics for human consumption, not only as regards the nutritional aspect but also regarding the taste of food and the pleasure derived from it. In this regard, the parameters such as the ease of chewing and the homogeneity of the tissues of food are not negligible and may deeply affect the success of sales and the distribution of the product. Speaking of meat, for example, the current state of the art provides processing protocol for certain cuts of this food so that the structure may change and enhance the characteristics to the detriment of others. It should be noted that the omission of these processing protocols before cooking make this food unpalatable and almost impossible to eat. The most important procedure for purposes of this transformation is Ageing, where the muscle loses its rigidity due to enzymatic, chemical and physical transformations, being transformed into meat for human consumption. We may define this pre-cooking phase as meat maturation. Currently Ageing consists in storing the carcass of the animal, once it has been opened and cleaned, in a vertical position in an environment with controlled temperature and humidity. During Ageing different phenomena occur, which also affect the commercial factors: for example the lowering of the PH value (i.e. the degree of acidity) of the muscle and the relative loss of water from the tissue. This phenomenon changes the weight of the food and then the economic yield of the meat cut. The basic hardness of meat, i.e. its tenderness characteristic, is a parameter that depends also on the connective tissue present therein, as well as on the parameters of quantity and quality of the crosslinks. The traditional cooking phase, which is carried out at high temperature, modifies the tenderness parameters in a range that is more acceptable but by doing so it gives the food undesired characteristics. The most important are:
1. The high moisture loss both of proteins and carbohydrates. This situation often results in the kitchen use of sauces and substances to be added to the food in order to rehydrate it and render it soft.
2. The loss of nutrients.
3. An uninviting aspect.

GB2458739 and DE102004011922 disclose food maturation process and device for carrying out food maturation wherein food is subjected to Ultrasounds.

Lastly, it should also be stressed that not all cuts of meat are equal and therefore the processes of Maturation and cooking are to depend on variables that are hardly controllable and may be assimilated to a single standard process for all types of meat. Regarding this heterogeneity of behaviour in many categories of food, a study has been launched on the foods in order to understand how to improve the state of the art of Maturation and cooking the meat to obtain from different types of animal muscle meat a product with a higher quality and palatability than that obtainable today with the prior art with a better yield regarding all respects (chewability, hydration of food, presence of most nutrients etc). This result, furthermore, has been seen to impact positively also on the economic yield from the sale of these foods. The study in question has led to the device according to the appended claims.

### DESCRIPTION OF THE INVENTON.

### PROCEDURE.

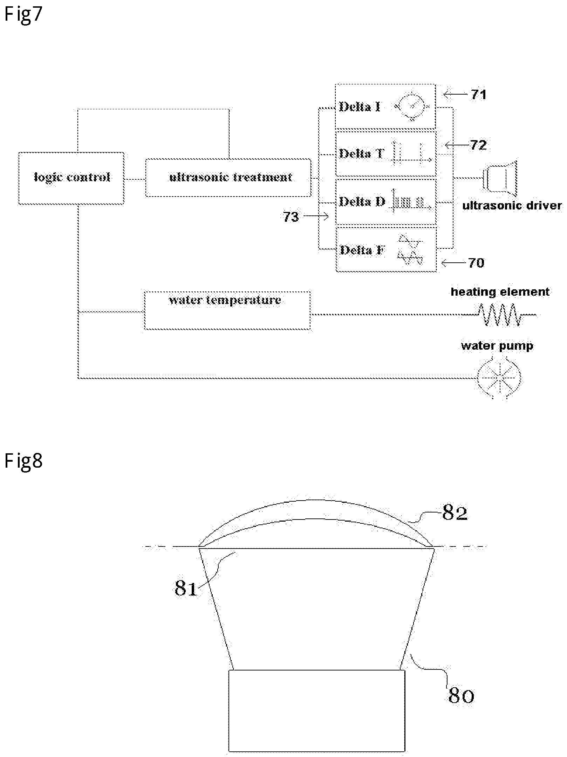

The device according to the Invention is defined by Claim 1, the process according to the Invention is defined by Claim 2. With the example of meat, we have tried to understand how to obtain a method of Maturation that should intensify even more the characteristics of the food and make it reach a state of Maturation better than that of the prior art. We will call this new type of Maturation a "Boosted Maturation". To obtain the Boosted Maturation we have resorted to a physical system to change the characteristics of the meat that characterise the final Hardness, i.e. the high presence in certain cuts of this food of the connective tissue discussed under paragraph "State of the Art". Excluding a priori a process for adding external substances, we have chosen a mechanical modelling action on the tissue provided primarily by waves of kinetic energy transmitted by Ultrasound transducers. Such devices may in fact emit sound waves at a high frequency (with different levels of intensity and frequency) that impact on the food tissue when it is immersed in a liquid, causing a great change in the basic Hardness of the food. This is possible because the Ultrasound waves inside the liquid create the formation of small air bubbles, which, due to the effect of the inhomogeneity of the pressure in the liquid itself, implode and allow to release their kinetic energy on the fibres of the food. The process was developed with the following conditions:
1. The meat must be immersed in a liquid to be affected in an effective manner by the Ultrasounds but enclosed inside a container to allow not to be contaminated by the treatment liquid; such container shall permit the addition of aromatic and/or marinading substances during maturation. In fact it has been proved that during this phase, the marinade and the presence of aromatic substances is particularly enhanced with respect to the prior art. The container that hosts the food must therefore be impermeable to liquids but permeable to the Ultrasound waves transmitted in the liquid, making an effective transduction of these waves therein. This parameter must be taken into consideration during the electric driving of transducers; during this sequence, in fact, one must consider the transfer function of the energy in the container. The presence of the container that is impermeable to liquids and permeable to the Ultrasound waves with its physical-mechanical characteristics is therefore essential to obtain a Boosted Maturation with Ultrasound that allows important physical/structural food modifications.
2. The temperature of the food during boosted maturation with Ultrasound must be kept constant in order to have excellent effectiveness. To ensure this condition can occur, it is necessary that the temperature of water or liquid surrounding the container where the food is inserted be treated with the emission of Ultrasound waves, both controlled and then kept at the right value also by means of a recirculation that allows homogeneity in the distribution of thermal energy.
3. The modulation and the discretisation of the intensity of the Ultrasound signal, the duration, range of frequencies and duty cycle are determined according to a function that is based on the idea of the invention. For every type of food subjected to the process of Ultrasound Boosted Maturation there is a range of frequencies (DeltaF) [Fig7 (70)] a range of Power (Deltal) [Fig7 (71)] a range of duration (DeltaT) [Fig7 (72)] and a range of cycle of emission of the Ultrasound in the unit of time, i.e. the Duty Cycle (DeltaD) [Fig7 (73)] such as to stabilise the temperature of the liquid that immerses the food in a predetermined range, avoiding its uncontrolled increase due to the effect of Ultrasound. This controlled temperature value allows to avoid the cooking of food during the maturation phase. To obtain this requirement we carry out an analysis of the energy levels of the harmonics constituting the driving signal of the Ultrasound. By associating a correct power value to the harmonics, it is possible to control the amount of energy and then check the variation of the temperature to which the liquid is subjected, by distributing different levels of this energy in the frequency spectrum of the driving signal of the Ultrasound transducers.
4. The necessary temperature stabilisation is to be further controlled through a decrease of the gas dissolved in the liquid contained in the tank. This is possible because the maturation process is started in the tank under vacuum, i.e. a physical state that allows the stabilisation of the gaseous exchange between the liquid and the air contained in the tank itself. The physical status of the vacuum decreases the effect of refraction of Ultrasound waves during scattering in the liquid as the lesser presence of gas increases the ease of wave propagation and subsequently limits the increase in temperature of the liquid.
5. The physical status of the vacuum also allows to make constant the value of the acoustic impedance of the liquid, which then becomes a constant and not a variable. This factor is related to the amount of gas dissolved in the liquid. Making the value of the impedance of the liquid constant, this renders predictable the amount of power of the Ultrasound wave in the impermeable containers that contain the product to be matured. This condition allows a controlled and stable scattering during time and for the energy transduced inside the container, allowing for control and a forecast of the result of the maturation induced by the Ultrasound system.

### DEVICE.

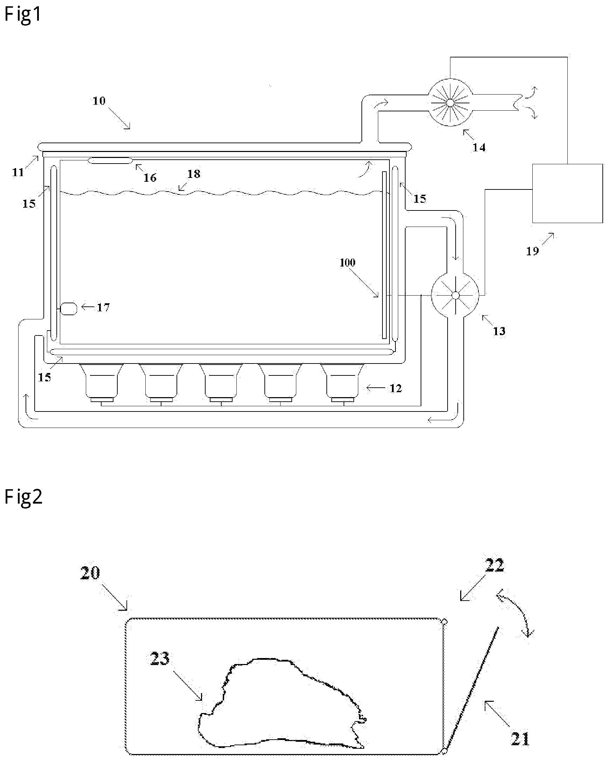

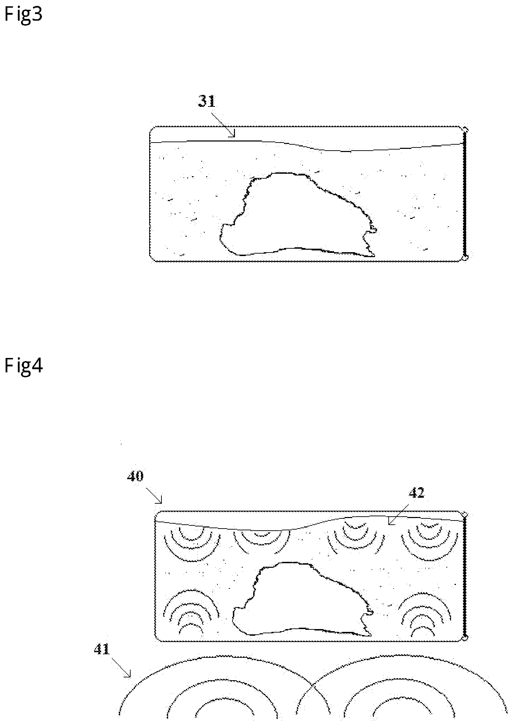

The device of the invention consists in its main parts in a tank made of stainless steel or other material [Fig.1(10)] fitted with watertight cover [Fig.1(11)] and equipped with one or more arrays of transducers for Ultrasound waves [Fig.1(12)] that may be transmitted in its cavity. The Ultrasound transducers are coupled to a convex metal lens with the appropriate size, positioned in the area of emission of the transducer. This lens allows to focus the energy of the Ultrasound wave and is suitably designed according to the limits of the physical law of Snell-Descartes on Refraction, in order to minimise the generation of standing waves. The liquid inside the tank [Fig.1 (18)] is circulated by a pump [Fig.1(13)] while a second air intake pump [Fig.1(14)] allows you to create a state of vacuum when necessary, between the liquid contained in the tank [Fig.1(18)] and the watertight cover [Fig.1(11)]. There are heating elements [Fig.1(15)], pressure [Fig.1(16)] temperature [Fig.1(17)] and liquid level sensors [Fig.1(100)]. All devices listed inserted in the tank, i.e. those that generate Ultrasound waves [Fig.1(12)], that measure pressure [Fig.1(16)], temperature [Fig.1(17)], liquid level [Fig.1(100)], which produce heating [Fig.1(15)], which generate a vacuum [Fig.1(14)] and which move the liquid inside the tank [Fig.1(13)] are controlled by an external PLC [Fig.1(19)] equipped with the appropriate drivers and with a user interface that allows the operator to display a monitor of the states and/or programs and/or edit the desired functions. In particular the liquid level sensor [Fig.1(100)] allows you to automatically turn off the device according to the invention, in order to avoid that the action of the Ultrasound waves without the liquid contained in the tank (or with too low a level) is able to destroy the same equipment and/or make it dangerous for the user. The device of the invention is shown on Fig.1 and is capable of performing the treatment of the invention. It is designed to accommodate the container inside [Fig.2(20)], said container not being part of the Invention. Such container is equipped with an openable side [Fig.2(21)] with hermetic closure [Fig.2(22)] made of a material that is permeable to both a temperature conditioning supplied from the outside and the Ultrasound waves generated outside it. There is food to be treated inside the container of Fig.2 [Fig.2(23)]. In addition to food, it is possible to insert in this container also a marinating liquid [Fig.3(31)] and/or contour substances that may improve the olfactory and/or taste and/or nutritional characteristics of the food. The structure of the food container [Fig.4 (40)] is designed with a material such as to confer a strong permeability to Ultrasound waves [Fig.4(41)] coming from the outside from the Ultrasound transducers [Fig.1(12)]. These waves scatter inside [Fig.4(42)] thanks to the physical properties of the structural material with which the container is built where the density of the material constituting the container is selected to assume a value of acoustic impedance entirely similar to that of the liquid in which the tank is immersed in. This physical characteristic, permitted for example by the modelling of plastic materials such as polypropylene and polyamide, allows the adaptation of acoustic impedance between the liquid and the container, allowing the maximum energy transfer of Ultrasound waves in its interior [Fig.4(40)].

### POCEDURE OF ULTRASOUND BOOSTED MATURATION BY MEANS OF THE DEVICE OF THE INVENTION.

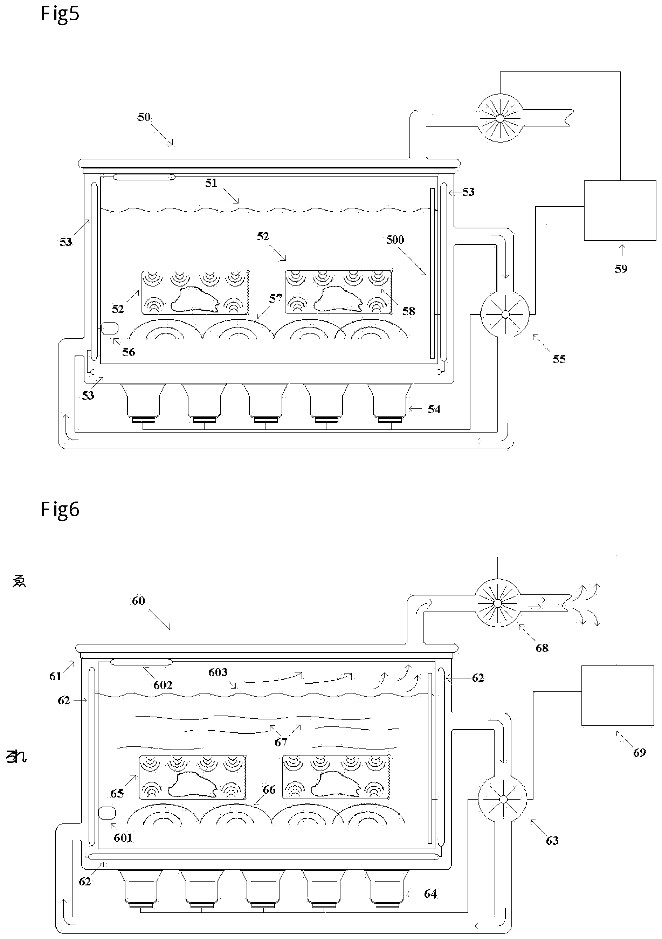

One or more containers of the food [Fig.5(52)] are placed inside the device for Ultrasound boosted maturation, and more precisely inside the tank [Fig.5(50)] automatically filled with the liquid [Fig.5(51)] under the strict control of the level sensor [Fig.5(500)]. At this point the treatment procedure is activated by means of the Ultrasound transducers [Fig.5(54)]. The pump [Fig.6(68)] sucks the air contained inside the tank above the level of the water. The Ultrasound waves [Fig.5(57)] strike the containers [Fig.5(52)], which transmit their energy inside the containers themselves [Fig.5(58)]. The conditioning system of the temperature of the liquid is activated by heating elements [Fig.5(53)] while the recirculation of the liquid is carried out through the pump [Fig.5(55)] in order to better distribute the thermal energy. The temperature sensor [Fig.5(56)] monitors this parameter while all control is managed by the central PLC [Fig.5(59)]. Once the Ultrasound Boosted Maturation has been carried out, the food inside of suitable containers [Fig.2(23)] has better physical/structural characteristics than a standard maturation process, i.e. that of the current State of the Art. The device made according to the idea of the invention at this point may optionally cook the food.

### ADVANTAGES OF THE INVENTION

We describe below the advantages of Ultrasound Boosted Maturation according to the device of Claim1 and process of Claim 2:
1. In Ultrasound Boosted Maturation the food reaches a degree of homogeneity of the tissues greater than the state of the art of classical Maturation. This facilitates cooking, improves chewability and the nutritional quality of the treated food.
2. In Ultrasound Boosted Maturation, we obtain a drastic reduction of the basic Hardness of the food if compared to the state of the art of classical Maturation.
3. In Ultrasound Boosted Maturation, we carry out a transformation of the connective tissue of the food in its gelatinous form in a quantity greater than the state of the art of Ageing.
4. In Ultrasound Boosted Maturation, we obtain a drastic reduction of the ageing time if compared to the state of the art.
5. In Ultrasound Boosted Maturation, less water is lost from the tissues with respect to the state of the art of Ageing.
6. In Ultrasound Boosted Maturation, it is possible to integrate in the food a marinade and/or aromatic substances with a higher efficiency with respect to the prior art in the treatment of foods.
7. Ultrasound Boosted Maturation takes place under strict control of the temperature on the food thanks to the method of parameterisation of the energy levels of the harmonics constituting the Ultrasound wave.

## Claims

1. Device for carrying out a process of maturation of food before cooking comprising:
i. a tank made of stainless steel or other material [Fig.1(10)] fitted with watertight cover [Fig.1(11)] and equipped with one or more arrays of transducers for Ultrasound waves [Fig.1(12)] that may be transmitted in its cavity,
ii. the Ultrasound transducers are coupled to a convex metal lens with the appropriate size, positioned in the area of emission of the transducer, the lens allowing to focus the energy of the Ultrasound wave,
iii. a liquid inside the tank [Fig.1(18)],
iv. a circulation pump [Fig.1(13)] configured to circulate the liquid inside the tank,
v. an air intake pump [Fig.1(14)] configured to create a state of vacuum when necessary, between the liquid contained in the tank [Fig.1(18)] and the watertight cover [Fig.1(11)],
vi. heating elements [Fig.1(15)] of all the walls of the tank by means of electrical resistance, pressure sensors [Fig.1(16)], temperature sensors [Fig.1(17)] and liquid level sensors [Fig.1(100)],
vii. all said elements, i.e Ultrasound transducers, heating elements, pressure-, temperature-and liquid level-sensors, circulation pump and vacuum pump, being inserted in the tank,
viii. all said elements being controlled by an external PLC [Fig.1(19)] equipped with the appropriate drivers and with a user interface that allows the operator to display a monitor of the states and/or programs and/or edit the desired functions,
ix. one or more waterproof plastic container [Fig.5(52)].

2. A process for food maturation before cooking carried out by means of the device of Claim 1, wherein:
i. one or more of the waterproof containers comprise food are placed inside the tank of the device, the tank being automatically filled with the liquid under the strict control of the liquid level sensor,
ii. the Ultrasound transducers emit Ultrasound waves,
iii. the air intake pump sucks the air contained inside the tank above the level of the water thereby placing the tank under vacuum,
iv. the Ultrasound waves strike the containers, which transmit their energy inside the containers themselves,
v. the temperature control system of the liquid is activated by the heating elements, while the recirculation of the liquid is carried out through the circulation pump in order to better distribute the thermal energy,
vi. the temperature sensor monitors the temperature while a control in managed by the PLC.

## Patentansprüche

1. Vorrichtung zur Durchführung eines Reifungsprozesses von Lebensmitteln vor dem Kochen, umfassend:
i. einen Behälter [Abb. 1(10)] aus rostfreiem Stahl oder einem anderen Material [Abb. 1(10)], der mit einer wasserdichten Abdeckung [Abb. 1(11)] versehen ist und mit einer oder mehreren Anordnungen von Wandlern für Ultraschallwellen [Abb. 1(12)] ausgestattet ist, die in seinem Hohlraum übertragen werden können,
ii. die Ultraschallwandler sind mit einer konvexen Metalllinse geeigneter Größe gekoppelt, die im Emissionsbereich des Wandlers angeordnet ist, wobei die Linse die Fokussierung der Energie der Ultraschallwelle ermöglicht,
iii. eine Flüssigkeit im Inneren des Behälters [Abb. 1(18)],
iv. eine Umwälzpumpe [Abb. 1(13)], die so konfiguriert ist, dass sie die Flüssigkeit im Inneren des Behälters umwälzt,
v. eine Luftansaugpumpe [Abb. 1(14)], die so konfiguriert ist, dass sie bei Bedarf einen Unterdruck zwischen der im Behälter [Abb. 1(18)] enthaltenen Flüssigkeit und der wasserdichten Abdeckung [Abb. 1(11)] erzeugt,
vi. Heizelemente [Abb. 1(15)] an allen Wänden des Behälters mittels elektrischem Widerstand, Drucksensoren [Abb. 1(16)], Temperatursensoren [Abb. 1(17)] und Flüssigkeitsstandssensoren [Abb. 1(100)],
vii. alle genannten Elemente, d. h. Ultraschallwandler, Heizelemente, Druck-, Temperatur- und Flüssigkeitsstandssensoren, Umwälzpumpe und Vakuumpumpe, in den Behälter eingesetzt sind,
viii. alle genannten Elemente werden von einer externen SPS [Abb. 1(19)] gesteuert, die mit den entsprechenden Treibern und einer Benutzerschnittstelle ausgestattet ist, die es dem Bediener ermöglicht, einen Bildschirm mit den Zuständen und/oder Programmen anzuzeigen und/oder die gewünschten Funktionen zu bearbeiten,
ix. einen oder mehrere wasserdichte Kunststoffbehälter [Abb. 5(52)].

2. Ein Verfahren zur Reifung von Lebensmitteln vor dem Kochen, das mittels der Vorrichtung nach Anspruch 1 durchgeführt wird, wobei:
i. ein oder mehrere der wasserdichten Behälter [Abb. 2(20)] mit Lebensmitteln in den Behälter [Abb. 1(10)] der Vorrichtung gestellt werden, wobei der Behälter [Abb. 1(10)] unter strenger Steuerung des Flüssigkeitsstandssensors automatisch mit der Flüssigkeit gefüllt wird,
ii. die Ultraschallwandler Ultraschallwellen aussenden,
iii. die Luftansaugpumpe die im Behälter enthaltene Luft oberhalb den Wasserstand ansaugt, wodurch der Behälter unter Vakuum gesetzt wird,
iv. die Ultraschallwellen treffen auf die Behälter, die ihre Energie in das Innere der Behälter selbst übertragen,
v. das System zur Temperaturkontrolle der Flüssigkeit wird durch die Heizelemente aktiviert, während die Umwälzung der Flüssigkeit durch die Umwälzpumpe erfolgt, um die Wärmeenergie besser zu verteilen,
vi. der Temperatursensor überwacht die Temperatur, während eine Steuerung durch die SPS erfolgt.

## Revendications

1. Dispositif permettant de réaliser un processus de maturation des aliments avant cuisson composé comme suit:
i. un réservoir en acier inoxydable ou autre matériau [Fig. 1(10)] muni d'un couvercle étanche [Fig. 1(11)] et équipé d'un ou plusieurs réseaux de transducteurs pour transmission d'ondes ultrasonores [Fig. 1(12)] dans sa cavité,
ii. les transducteurs à ultrasons sont couplés à une lentille en métal convexe de dimension appropriée, positionnée dans la zone d'émission du transducteur. La lentille permet de concentrer l'énergie de l'onde ultrasonore,
iii. un liquide à l'intérieur du réservoir [Fig. 1(18)],
iv. une pompe de circulation [Fig. 1(13)] configurée pour faire circuler le liquide à l'intérieur du réservoir,
v. une pompe d'admission d'air [Fig. 1(14)] configurée pour créer, si nécessaire, un état de vide entre le liquide contenu dans le réservoir [Fig. 1(18)] et le couvercle étanche [Fig. 1(11)],
vi. chauffage des éléments chauffants [Fig. 1(15)] au niveau de toutes les parois du réservoir au moyen d'une résistance électrique, de capteurs de pression [Fig. 1(16)], de capteurs de température [Fig. 1(17)] et de capteurs de niveau de liquide [Fig. 1(100)],
vii. tous les éléments précités, à savoir les transducteurs à ultrasons, les éléments chauffants, les capteurs de pression, de température et de niveau de liquide, la pompe de circulation et la pompe à vide sont insérés dans le réservoir,
viii. tous les éléments précités sont contrôlés par un PLC externe [Fig. 1(19)] équipé des pilotes appropriés et d'une interface utilisateur permettant à l'opérateur de contrôler les différents états et/ou programmes, et/ou d'éditer les fonctions souhaitées,
ix. un ou plusieurs conteneurs en plastique étanches [Fig. 5(52)].

2. Un processus de maturation des aliments avant cuisson réalisé au moyen du dispositif du Message 1, dans lequel:
i. un ou plusieurs des conteneurs étanches contenant des aliments sont placés à l'intérieur du réservoir du dispositif, le réservoir est automatiquement rempli de liquide sous le strict contrôle du capteur de niveau du liquide,
ii. les transducteurs à ultrasons émettent des ondes ultrasonores,
iii. la pompe d'admission d'air aspire l'air contenu à l'intérieur du réservoir au-dessus du niveau de l'eau, plaçant ainsi le réservoir sous vide,
iv. les ondes ultrasonores heurtent les conteneurs, qui transmettent leur énergie à l'intérieur des conteneurs mêmes,
v. le système de contrôle de température du liquide est activé par les éléments chauffants, pendant que le liquide est mis en recirculation via la pompe de circulation afin de mieux répartir l'énergie thermique,
vi. le capteur de température surveille la température et le contrôle est géré par le PLC.
